# EUROPÄISCHE PATENTANMELDUNG

(11) **EP 4 696 560 A1**
(43) Veröffentlichungstag der Anmeldung: **18.02.2026**
(21) Anmeldenummer: 25195454.1
(22) Anmeldetag: 12.08.2025
(51) Int. Cl.: B60R 5/04

(54) **ROLLOVORRICHTUNG FÜR EIN KRAFTFAHRZEUG UND LAGERBUCHSE FÜR EINE ROLLOVORRICHTUNG FÜR EIN KRAFTFAHRZEUG**

(30) Priorität: 14.08.2024 DE 102024123250
(71) Anmelder: FKT GmbH, 85104 Pförring (DE)
(72) Erfinder: Günthner, Guido, 85104 Pförring/Lobsing (DE); Regler, Michael, 85095 Denkendorf (DE)
(74) Vertreter: Canzler & Bergmeier Patentanwälte Partnerschaft mbB

(57) **Zusammenfassung**

Eine Rollovorrichtung (1) für ein Kraftfahrzeug (2), insbesondere eine Rollovorrichtung (1) zum Abtrennen eines Laderaums (3) eines Kraftfahrzeugs (2), weist eine Wickelwelle (4) auf, auf welche eine Rollobahn (5) aufwickelbar ist,
sowie wenigstens eine Lagervorrichtung (9), mittels welcher die Wickelwelle (4) um ihre Längsachse (10) drehbar gelagert ist. Die Lagervorrichtung (9) umfasst eine Lagerbuchse (11) und einen Lagerzapfen (12) und die Lagervorrichtung (9) weist mehrere, in Umfangsrichtung beabstandete, in Radialrichtung hervorstehende Lagerfortsätze (8) aus einem ersten Material (13) zur Lagerung des Lagerzapfens (12) in der Lagerbuchse (11) auf. Die Lagerfortsätze (8) sind elastisch nachgiebig an dem Lagerzapfen (12) oder an der Lagerbuchse (11) angeordnet und die Lagerfortsätze (8) sind mit einem zweiten, weicheren Material (14) hinterfüllt.

## Beschreibung

Die vorliegende Erfindung betrifft eine Rollovorrichtung für ein Kraftfahrzeug, insbesondere eine Rollovorrichtung zum Abtrennen eines Laderaums eines Kraftfahrzeugs, mit einer Wickelwelle, auf welche eine Rollobahn aufwickelbar ist, mit wenigstens einer Lagervorrichtung, mittels welcher die Wickelwelle um ihre Längsachse drehbar gelagert ist, wobei die Lagervorrichtung eine Lagerbuchse und einen Lagerzapfen umfasst und wobei die Lagervorrichtung mehrere, in Umfangsrichtung beabstandete, in Radialrichtung hervorstehende Lagerfortsätze aus einem ersten Material zur Lagerung des Lagerzapfens in der Lagerbuchse aufweist.

Aus der DE 103 38 900 A1 ist eine Rollovorrichtung für ein Kraftfahrzeug bekannt, bei welcher ein dünnwandiges Wickelrohr drehbar auf einer ortsfesten Achse gelagert ist. Um die Lagerung möglichst spielfrei auszubilden, sind an der Innenwandung des Wickelrohres Fortsätze ausgebildet, die ein Stück weit radial nach innen hervorstehen und hierdurch Lagerpunkte für das Wickelrohr ausbilden. Um diese Fortsätze auszubilden, werden auf der Außenseite des Rohres Senken eingeprägt, wodurch sich an der Innenwandung des Wickelrohr hervorstehende Bereiche ausbilden. Diese Fortsätze wirken als Gleitpunkte mit der Außenoberfläche der Achse zusammen.

Aus der DE 10 2017 211 384 A1 ist ebenfalls eine Rollovorrichtung bekannt, bei welcher die Wickelwelle spielarm gelagert werden soll. Hierzu weist ein Loslager der Wickelwelle ein in Radialrichtung elastisch nachgiebige Stützelement auf, dass einen Toleranzausgleich zwischen der Wickelwelle und der Tragstruktur der Wickelwelle ermöglicht. Das Stützelement kann beispielsweise als O-Ring ausgebildet sein oder nach einer anderen Variante können mehrere einzelne Stützelemente vorgesehen sein, von denen einer elastisch nachgiebig ausgebildet ist.

Aufgabe der vorliegenden Erfindung ist es, die aus dem Stand der Technik bekannten Rollovorrichtungen zu verbessern, insbesondere eine Rollovorrichtung sowie eine Lagerbuchse vorzuschlagen, welche unerwünschte Geräuschentwicklung vermeiden.

Die Aufgabe wird gelöst durch eine Rollovorrichtung und eine Lagerbuchse mit den Merkmalen der unabhängigen Patentansprüche.

Eine Rollovorrichtung für ein Kraftfahrzeug, insbesondere eine Rollovorrichtung zum Abtrennen eines Laderaums eines Kraftfahrzeugs, weist eine Wickelwelle auf, auf welche eine Rollobahn aufwickelbar ist, sowie wenigstens eine Lagervorrichtung, mittels welcher die Wickelwelle um ihre Längsachse drehbar gelagert ist. Die Lagervorrichtung umfasst eine Lagerbuchse und einen Lagerzapfen. Die Lagervorrichtung weist mehrere, in Umfangsrichtung beabstandete, in Radialrichtung hervorstehende Lagerfortsätze aus einem ersten Material zur Lagerung des Lagerzapfens in der Lagerbuchse auf.

Es wird vorgeschlagen, dass die Lagerfortsätze elastisch nachgiebig an dem Lagerzapfen oder an der Lagerbuchse angeordnet sind und dass die Lagerfortsätze mit einem zweiten, weicheren Material hinterfüllt sind.

Dadurch, dass die Lagerfortsätze mit einem zweiten Material hinterfüllt sind, welches weicher ist als das erste Material der Lagerfortsätze, können mehrere Vorteile erzielt werden. Zum einen kann durch die Hinterfüllung mit dem weicheren Material die Stabilität der Lagerfortsätze und damit die Lebensdauer der gesamten Rollovorrichtung erhöht werden und dabei zugleich die elastische Nachgiebigkeit der Lagerfortsätze erhalten werden. Zudem kommt dem zweiten, weicheren Material eine Dämpfungsfunktion zu, welche Schwingungen der Wickelwelle in der Lagervorrichtung und damit verbundene unerwünschte Geräusche, insbesondere Klappergeräusche, vermeidet. Ebenso können schleifende Geräusche, welche beim Gleiten der Wickelwelle in der Lagervorrichtung entstehen können, vermieden werden. Zugleich können dadurch, dass alle Lagerfortsätze elastisch nachgiebig sind und mit einem weicheren, dämpfenden Material hinterfüllt sind, nicht nur Durchmesserabweichungen, sondern auch Winkelabweichungen zwischen der Wickelwelle und der Lagervorrichtung ausgeglichen werden. Besonders vorteilhaft ist es zudem, dass es durch die Auswahl und die Geometrie des zweiten Materials möglich ist, sowohl die Passung zwischen dem Lagerzapfen und der Lagerbuchse genau zu justieren. So wird beispielsweise mit einem härteren zweiten Material eine engere Passung als mit einem weicheren zweiten Material realisiert. Hierdurch kann eine besonders spielarme oder sogar spielfreie Lagerung erzielt werden. Ebenso können die Dämpfungseigenschaften der Lagervorrichtung durch die Materialauswahl und die Geometrie des zweiten Materials in einem weiten Bereich eingestellt werden. Die Passung und die Dämpfungseigenschaften können somit genau auf den jeweiligen Anwendungsfall abgestimmt werden.

Dieselben Vorteile können mit einer Lagerbuchse für eine solche Rollovorrichtung für ein Kraftfahrzeug erzielt werden, welche ebenfalls beansprucht wird. Bei der Lagerbuchse sind die Lagerfortsätze elastisch nachgiebig an der Lagerbuchse angeordnet und mit einem zweiten Material hinterfüllt welches weicher ist als das erste Material.

Bei der Rollovorrichtung und bei der Lagerbuchse ist es vorteilhaft, wenn drei Lagerfortsätze vorgesehen sind. Hierdurch kann eine Dreipunktlagerung ausgebildet werden, welche eine besonders exakte und spielarme oder spielfreie Lagerung der Wickelwelle in der Lagervorrichtung ermöglicht.

Auch ist es bei der Rollovorrichtung und bei der Lagerbuchse von Vorteil, wenn die Lagerfortsätze bezogen auf die Längsachse der Wickelwelle derart abgeschrägt oder abgerundet sind, dass sie einen Winkelversatz zwischen dem Lagerzapfen und der Lagerbuchse ermöglichen. Besonderes bevorzugt sind die Lagerfortsätze bezogen auf die Längsachse der Wickelwelle derart abgeschrägt oder abgerundet, dass sich eine linienförmige, vorzugsweise ringförmige, besonders bevorzugt kreislinienförmige, Berührung zwischen dem Lagerzapfen und der Lagerbuchse ergibt. Dies ermöglicht es in besonders vorteilhafter Weise, auch Winkelabweichungen zwischen dem Lagerzapfen und der Lagerbuchse auszugleichen.

Des Weiteren ist es bei der Rollovorrichtung und bei der Lagerbuchse vorteilhaft, wenn die Lagerfortsätze radial nach innen hervorstehend an einer Innenwandung der Lagerbuchse angeordnet sind. Die Lagerbuchse mit dem Fortsatz kann hierdurch in günstiger Weise als separates Bauteil hergestellt werden. Zudem sind die Lagerfortsätze hierdurch beim Handling der Rollovorrichtung und der Lagerbuchse gut vor Beschädigungen geschützt.

Ebenso bringt es Vorteile mit sich, wenn ein durch die Lagerfortsätze gebildeter Innendurchmesser der Lagerbuchse im unmontierten Zustand kleiner ist als ein Außendurchmesser des Lagerzapfens. Aufgrund der elastischen Nachgiebigkeit der Lagerfortsätze können diese dann bei der Montage nachgeben, wodurch sich eine völlig spielfreie Lagerung des Lagerzapfens in der Lagerbuchse ergibt. Wird dabei wie zuvor beschrieben nur eine linienförmige, insbesondere kreislinienförmige oder ringförmige Berührung im Bereich der Lagerfortsätze erzielt, so läuft die Wickelwelle zudem besonders geräuscharm in der Lagervorrichtung.

Nach einer anderen Ausführung ist es vorteilhaft, wenn die Lagerbuchse durch ein Ende einer als Wickelrohr ausgebildeten Wickelwelle ausgebildet ist. Hierdurch ist es möglich, die Wickelwelle bzw. das Wickelrohr direkt auf einem Lagerzapfen einer Rollohalterung zu lagern, wodurch sich ein konstruktiv besonders einfacher Aufbau ergibt.

Nach einer weiteren Ausführung ist es vorteilhaft, wenn die Lagerbuchse mit einem Ende der Wickelwelle verbunden ist, insbesondere in das Ende einer als Wickelrohr ausgebildeten Wickelwelle eingesteckt ist. Die Lagerbuchse und die Wickelwelle bzw. das Wickelrohr können hierdurch gesondert voneinander hergestellt werden, sodass die Materialien der Lagerbuchse und der Wickelwelle besonders gut auf ihre jeweilige Funktion abgestimmt werden können.

Ebenso bringt es Vorteile mit sich, wenn der Lagerzapfen durch einen Lagerstab, insbesondere einen Metallstab oder einen Kunststoffstab, ausgebildet ist, welcher mit einer Rollohalterung, insbesondere einem Endstück eines Rolloträgers, verbunden ist. Auch der Lagerzapfen kann durch die getrennte Herstellung von der Rollohalterung besonders gut auf seine Funktion abgestimmt werden. Vorzugsweise ist der Lagerzapfen ein Metallstab, sodass dieser besonders verschleißfest ist. Denkbar ist es jedoch auch, dass der Lagerzapfen als Kunststoffstab ausgebildet ist, wodurch dieser besonders kostengünstig hergestellt werden kann. Dabei ist es auch denkbar, den Kunststoffstab mit einer metallischen Beschichtung oder mit einer Buchse aus einem Metallmaterial zu versehen, um ihn im Bereich der eigentlichen Lagerstelle besonders verschleißfest auszubilden.

Vorteilhaft ist es zudem, wenn der Lagerzapfen durch einen zapfenförmigen Vorsprung einer Rollohalterung, insbesondere eines Endstücks eines Rolloträgers, gebildet ist. Die Wickelwelle, bzw. das Wickelrohr kann hierdurch ohne zusätzliche Bauteile direkt an der Rollohalterung gelagert werden. Der konstruktive Aufbau der Rollovorrichtung kann hierdurch einfach gehalten werden. Vorzugsweise ist dabei der Vorsprung einstückig mit der Rollohalterung ausgebildet, wodurch sich eine noch einfachere Konstruktion mit noch weniger Bauteilen ergibt. Durch eine solche einfache Konstruktion können auch Toleranzenketten vermieden werden, was ebenfalls zur spielarmen Lagerung beiträgt.

Sind die Lagerfortsätze an dem Lagerzapfen angeordnet, so ist es vorteilhaft, wenn ein durch die Lagerfortsätze gebildeter Außendurchmesser des Lagerzapfens im unmontierten Zustand größer ist als ein Innendurchmesser der Lagerbuchse. Wie bereits zur Lagerbuchse beschrieben, können die Lagerfortsätze dann bei der Montage nachgeben und werden an den Lagerzapfen angedrückt, wodurch sich wiederum eine völlig spielfreie Lagerung des Lagerzapfens in der Lagerbuchse ergibt.

Vorteile bringt es zudem mit sich, wenn das zweite Material ein elastomeres Material ist, insbesondere ein thermoplastisches Elastomer ist. Elastomere Materialien gewährleisten aufgrund ihrer elastischen Eigenschaften, dass die elastische Nachgiebigkeit der Lagerfortsätze erhalten bleibt und haben zudem gute dämpfende Eigenschaften. Thermoplastische Elastomere sind zudem spritzgießfähig, sodass das zweite Material in besonders vorteilhafter Weise in einem Spritzgussverfahren in die Lagerbuchse eingebracht werden kann.

Auch ist es von Vorteil, wenn das erste Material ein thermoplastischer Kunststoff ist. Derartige Kunststoffmaterialien weisen zum einen eine vergleichsweise gute Verschleißfestigkeit auf und sind zum anderen ebenfalls spritzgießfähig.

Entsprechend bringt es Vorteile mit sich, wenn die Lagerbuchse oder der Lagerzapfen ein Kunststoffspritzgussstück ist. Die Lagerbuchse bzw. der Lagerzapfen kann hierdurch besonders kostengünstig in großen Stückzahlen hergestellt werden.

Besonders vorteilhaft ist es, wenn die Lagerbuchse oder der Lagerzapfen ein Zwei-Komponenten-Spritzgussstück ist, bei welchem das zweite Material zum Hinterfüllen der Lagerfortsätze direkt bei der Herstellung mit eingespritzt ist. Zwar ist das Verfahren durch die Zwei-Komponenten-Technik etwas aufwendiger, jedoch können bei großen Stückzahlen wie in der Automobilindustrie die Lagerbuchse oder der Lagerzapfen dennoch wirtschaftlich hergestellt werden.

Weitere Vorteile der Erfindung sind in den nachfolgenden Ausführungsbeispielen beschrieben. Es zeigen:
- **Figur 1**: eine perspektivische Ansicht eines Laderaums eines Kraftfahrzeugs mit einer Rollovorrichtung,
- **Figur 2**: eine schematische, geschnittene Darstellung einer Rollovorrichtung als Übersichtsdarstellung,
- **Figur 3**: eine schematische Draufsicht auf eine Lagerbuchse mit Lagerfortsätzen nach einer ersten Ausführung,
- **Figur 4**: eine schematische, geschnittene Seitenansicht einer Lagervorrichtung nach einer ersten Ausführung,
- **Figur 5**: eine schematische Draufsicht auf eine Lagerbuchse mit Lagerfortsätzen nach einer zweiten Ausführung,
- **Figur 6**: eine schematische, geschnittene Seitenansicht einer Lagervorrichtung nach einer zweiten Ausführung,
- **Figur 7**: eine schematische, geschnittene Seitenansicht einer Lagervorrichtung nach einer dritten Ausführung,
- **Figur 8**: eine schematische, geschnittene Seitenansicht einer Lagervorrichtung nach einer vierten Ausführung, sowie
- **Figur 9**: eine schematische, geschnittene Seitenansicht einer Lagervorrichtung nach einer weiteren Ausführung.

Bei der nachfolgenden Beschreibung der Ausführungsbeispiele werden Merkmale, die in den verschiedenen Figuren in ihrer Ausgestaltung und/oder Wirkweise identisch und/oder zumindest vergleichbar sind, jeweils mit den gleichen Bezugszeichen versehen. Weiterhin werden Merkmale meist lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Sofern Merkmale nicht nochmals detailliert erläutert werden, entspricht deren Ausgestaltung und/oder Wirkweise der Ausgestaltung und Wirkweise der anhand einer oder mehrerer der vorhergehenden Figuren bereits beschriebenen Merkmale. Weiterhin sind aus Gründen der Übersichtlichkeit von mehreren identischen Bauteilen bzw. Merkmalen oftmals nur eines oder nur einige wenige beschriftet.

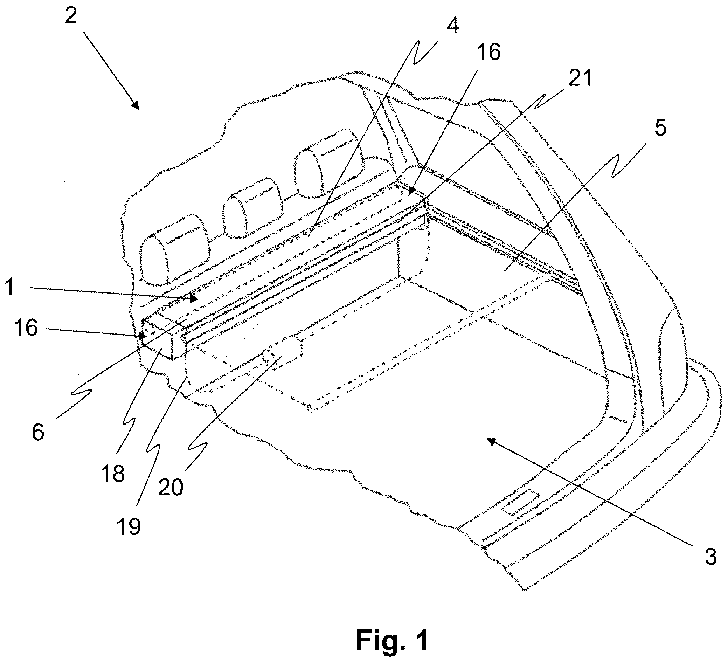

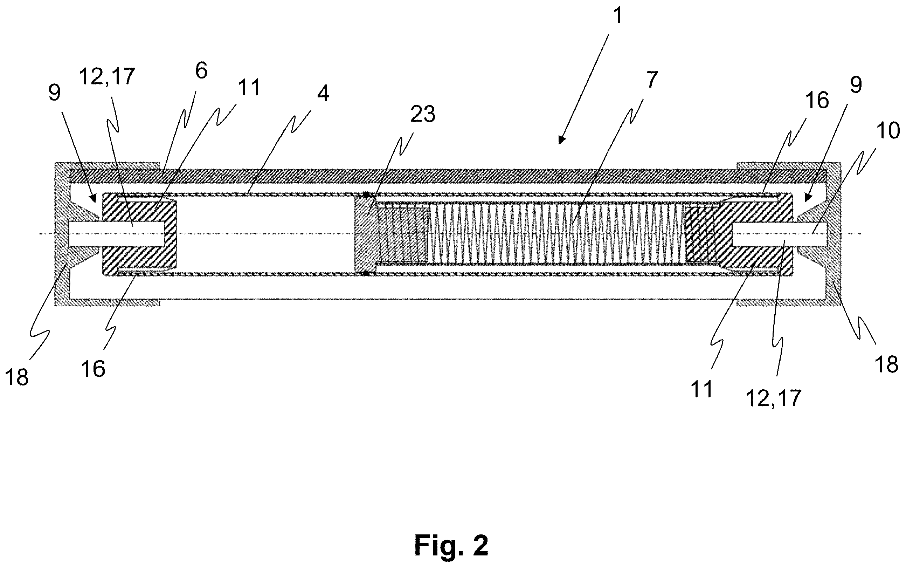

Figur 1 zeigt eine perspektivische, abgebrochene Darstellung eines Laderaums 3 eines Kraftfahrzeugs 2 mit einer Rollovorrichtung 1. Die Rollovorrichtung 1 weist eine drehbar gelagerte Wickelwelle 4 auf, auf welche eine Rollobahn 5 aufwickelbar ist. Die Rollobahn 5 kann mittels eines Auszugselements 21 aus ihrer hier in durchgezogenen Linien dargestellten, zurückgezogenen Stellung in ihre hier in strichpunktierten Linien dargestellte, ausgezogene Stellung überführt werden. Die Rollovorrichtung 1 kann entweder manuell betätigt werden oder aber, wie hier dargestellt, mittels eines Antriebs 20, welcher über Betätigungsmittel 19 wie beispielsweise Steigungskabel dann das Auszugselement 21 betätigt. Zum Wiederaufwickeln der Rollobahn 5 auf die Wickelwelle 4 ist ein Federmotor vorgesehen, wie anhand der Figur 2 im Folgenden noch erläutert wird.

Die Wickelwelle 4 ist mittels wenigstens einer Lagervorrichtung 9 (s. Figur 2) um ihre Längsachse 10 drehbar (siehe Figur 2) in der Rollovorrichtung 1 gelagert. Im Regelfall sind zwei seitliche Rollohalterungen 18 an den seitlichen Enden 16 der Wickelwelle 4 vorgesehen, wobei jeweils eine Lagervorrichtung 9 im Bereich jeder Rollohalterung 18 angeordnet bzw. ausgebildet ist. Dabei kann die Wickelwelle 4 kassettenlos in den beiden seitlichen Rollohalterungen 18 aufgenommen sein, welche beispielsweise direkt an der Karosserie des Kraftfahrzeugs 2 angebracht sind. Die beiden Rollohalterungen 18 können jedoch auch durch einen Rolloträger 6 miteinander verbunden sein, wodurch die Rollovorrichtung 1 Stabilität erhält und sowohl bei der Montage als auch im späteren Gebrauch gut gehandhabt werden kann. Insbesondere kann die Rollovorrichtung 1 hierdurch auch aus dem Kraftfahrzeug 2 entnommen werden. Gemäß der hier gezeigten Darstellung ist der Rolloträger 6 als Rollokassette ausgebildet, wodurch die Wickelwelle 4 von allen Seiten gut geschützt ist. Die seitlichen Rollohalterungen 18 sind in diesem Fall durch zwei Endstücke der Rollokassette ausgebildet.

Die Anordnung der Rollovorrichtung 1 in einem Laderaum 3 eines Kraftfahrzeugs 2 ist lediglich beispielhaft zu verstehen. Die im Folgenden beschriebene Rollovorrichtung 1 kann ebenso auch an anderen Stellen eines Kraftfahrzeugs 2 eingesetzt werden, beispielsweise als Fensterrollo, als Rollo im Bereich eines Dachhimmels, oder auch als Abtrennvorrichtung zur Abtrennung verschiedener Bereiche des Kraftfahrzeugs 2 voneinander.

Figur 2 zeigt eine schematische, geschnittene Darstellung einer Rollovorrichtung 1. Wie schon zu Figur 1 ausgeführt, beinhaltet die Rollovorrichtung 1 eine Wickelwelle 4, auf welche die hier nicht dargestellte Rollobahn 5 aufwickelbar ist. Weiterhin erkennbar sind die beiden seitlichen Rollohalterungen 18 sowie im vorliegenden Fall ein die beiden Rollohalterungen 18 verbindender Rolloträger 6. Die Wickelwelle 4 ist im vorliegenden Fall als Wickelrohr ausgebildet, innerhalb dessen eine Spiralfeder 7 spannbar angeordnet ist, um den Federmotor zum Wiederaufwickeln der Rollobahn 5 auszubilden. Die Wickelwelle 4 ist mittels einer, vorliegend zwei, Lagervorrichtungen 9 drehbar um ihre Längsachse 10 an der Rollohalterung 18, vorliegend an den beiden seitlichen Rollohalterungen 18, gelagert.

Die Lagervorrichtungen 9 umfassen jeweils eine Lagerbuchse 11 sowie einen in der Lagerbuchse 11 drehbar aufgenommenen Lagerzapfen 12. Im vorliegenden Beispiel sind die Lagerbuchse 11 jeweils in die seitlichen Enden 16 der als Wickelrohr ausgebildeten Wickelwelle 4 eingesteckt und rotieren mit dieser um die Lagerzapfen 12. Die Lagerzapfen 12 sind gemäß vorliegendem Beispiel als Lagerstäbe 17 ausgebildet, welche mit den seitlichen Rollohalterungen 18 verbunden sind. Die Lagerstäbe 17 sind bevorzugt als Metallstäbe ausgebildet und hierdurch besonders verschleißfest ausgeführt. Es ist jedoch durchaus auch möglich, die Lagerstäbe 17 als Kunststoffstäbe auszuführen.

Die Funktionsweise des Federmotors mit der Spiralfeder 7 ist bekannt und wird deshalb hier nur kurz dargelegt. Die Spiralfeder 7 ist mit ihrem einen Ende, in der vorliegenden Figur 2 dem linken Ende, über einen Stützzapfen 23 drehfest und axialfest mit der Wickelwelle 4 verbunden, wie vorliegend durch die zwei schwarzen Punkte symbolisiert. Das andere Ende der Spiralfeder 7 ist hingegen drehbar und axial verschiebbar in der als Wickelrohr ausgebildeten Wickelwelle 4 aufgenommen, wodurch das Vorspannen der Spiralfeder 7 ermöglicht wird. Zum Vorspannen der Spiralfeder wird beispielsweise die im Bild rechts dargestellte Lagerbuchse 11 mit dem Ende der Spiralfeder 7 verbunden. Sodann wird die Spiralfeder 7 durch Drehen der Lagerbuchse 11 vorgespannt und anschließend die rechts dargestellte Lagerbuchse 11 ebenfalls mit der Wickelwelle 4 verbunden, wodurch die Vorspannung der Spiralfeder 7 fixiert wird.

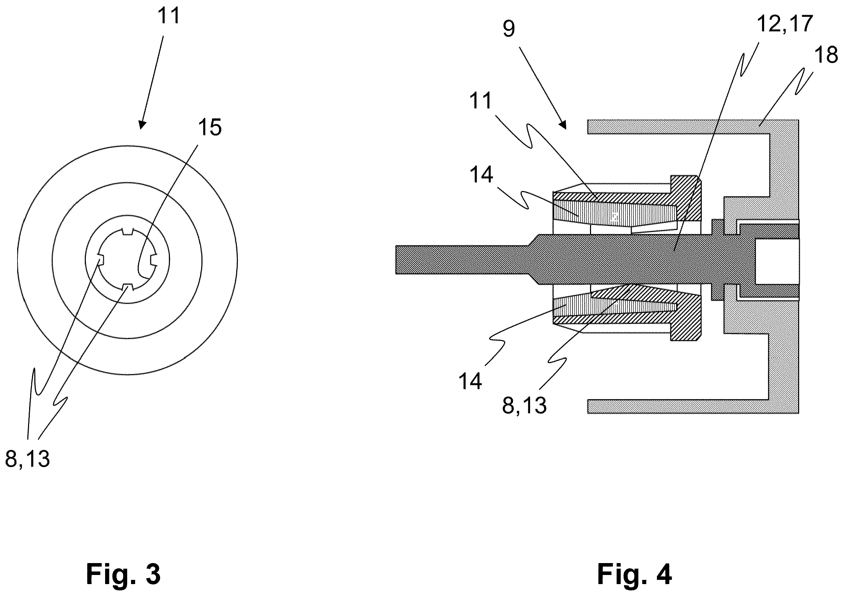

Die Lagervorrichtungen 9 mit der Lagerbuchse 11 und dem Lagerzapfen 12 sind hier lediglich schematisch dargestellt. Die genaue Funktionsweise wird anhand der folgenden Figuren 3 - 9 beschrieben.

Figur 3 zeigt eine schematische Draufsicht auf eine Lagerbuchse 11 mit Lagerfortsätzen 8 nach einer ersten Ausführung. Die Lagerbuchse 11 weist dabei mehrere, in Umfangsrichtung voneinander beabstandete und in Radialrichtung hervorstehende Lagerfortsätze 8 aus einem ersten Material 13 auf. Das erste Material 13 ist vorzugsweise ein vergleichsweise verschleißfestes Kunststoffmaterial. Gemäß vorliegender Darstellung sind vier Lagerfortsätze 8 vorgesehen, es können jedoch auch weniger oder mehr Lagerfortsätze 8 sein. Die Lagerfortsätze 8 sind dabei radial nach innen hervorstehend an einer Innenwandung 15 der Lagerbuchse 11 angeordnet. Die Lagerfortsätze 8 sind vorzugsweise einteilig mit der Lagerbuchse 11 ausgebildet bzw. an diese angefordert. Die Lagerbuchse 11 mitsamt den Lagerfortsätzen 8 kann hierdurch beispielsweise als Kunststoffspritzgussstück aus dem ersten Material 13 hergestellt werden.

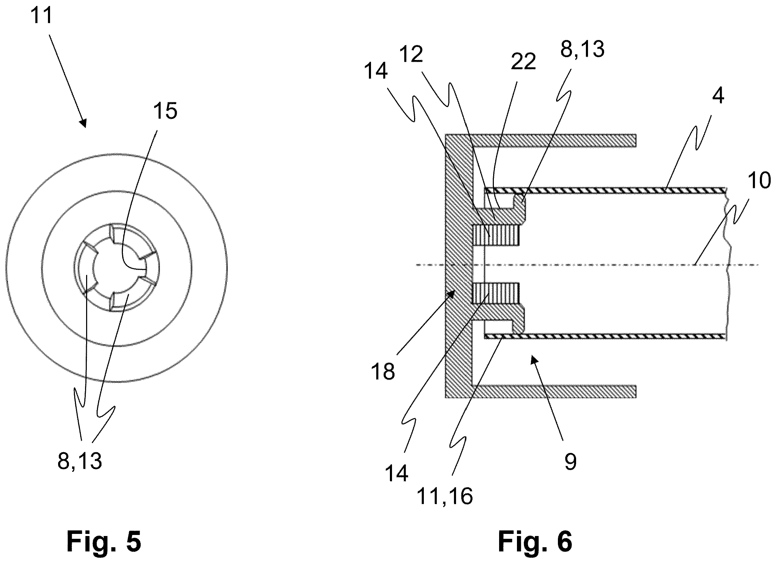

Wie nun der Figur 4 entnehmbar, sind die elastisch nachgiebigen Lagerfortsätze 8 mit einem zweiten Material 14 hinterfüllt, welches weicher ist als das erste Material 13. Das zweite Material 14 ist vorzugsweise ein Elastomer und weist hierdurch schwingungs- und geräuschdämpfende Eigenschaften auf. Gemäß der Darstellung der Figur 4 sind, wie auch in Figur 5 gezeigt, lediglich 3 Lagerfortsätze 8 vorgesehen, sodass in der hier gezeigten Schnittdarstellung lediglich ein Lagerfortsatz 8 innerhalb der Schnittebene erkennbar ist. Die Lagerbuchse 8 ist auch hier in das Ende 16 der als Wickelrohr ausgebildeten Wickelwelle 4 eingesteckt.

Durch die Hinterfüllung der Lagerfortsätze 8 mit dem weicheren, zweiten Material 14 kann die elastische Nachgiebigkeit der Lagerfortsätze 8 beeinflusst werden. Aufgrund der Elastizität des zweiten, weicheren Materials 14 können die Lagerfortsätze 8 bei der Montage des Lagerzapfens 12 in die Lagerbuchse 11 noch immer elastisch nachgeben und hierdurch eine spielarme oder spielfreie Lagerung gewährleisten. Zugleich werden durch die Hinterfüllung mit dem zweiten Material 14 Geräusche und Schwingungen jedoch gedämpft, sodass sowohl in der zurückgezogenen Ruhestellung der Rollobahn 5 als auch beim Ausziehen der Rollobahn 5 (siehe Figur 1) unerwünschte Geräusche durch die Rollovorrichtung 1 vermieden werden können.

Wie der Figur 4 weiterhin entnehmbar, sind die Lagerfortsätze 8 bezogen auf die Längsachse 10 der Wickelwelle 4 (siehe Figur 2) abgeschrägt, sodass sich eine nur linienförmige Berührung zwischen dem Lagerzapfen 12 und der Lagerbuchse 11 ergibt. Hierdurch können Winkelabweichungen zwischen der Lagerbuchse 11 und dem Lagerzapfen 12 besonders gut ausgeglichen werden. Bevorzugt ist dabei der durch die Lagerfortsätze 8 gebildete, kleinste Innendurchmesser der Lagerbuchse 11 in unmontiertem Zustand kleiner als der Außendurchmesser des Lagerzapfens 12. Bei der Montage werden dann die Lagerfortsätze 8 durch den Lagerzapfen 12 radial nach außen hin weggedrückt. Hierdurch ergibt sich eine vollständig spielfreie Lagerung.

Der in Figur 4 gezeigte Lagerzapfen 12 ist ebenfalls als Lagerstab 17 ausgebildet. Im Unterschied zu den Lagerstäben 17 der Figur 2 durchdringt der vorliegend gezeigte Lagerstab 17 jedoch die Rollohalterung 18. Der Lagerstab 17 kann hierdurch auch zum Spannen der im Inneren der Wickelwelle 4 angeordneten Spiralfeder 7 dienen. Das der Rollohalterung 18 abgewandte Ende des Lagerstabes 17 kann hierzu mit dem Ende der hier nicht dargestellten Spiralfeder 7 beispielsweise formschlüssig verbunden werden. Diese Ausführung eines Lagerstabes 17 erlaubt in vorteilhafter Weise auch ein Nachspannen der Spiralfeder 7, nachdem die Rollovorrichtung 1 in das Kraftfahrzeug 2 montiert ist.

Figur 5 zeigt eine weitere Ausführung einer Lagerbuchse 11 in einer schematischen Draufsicht. Die hier gezeigte Lagerbuchse 11 weist lediglich drei Lagerfortsätze 8 aus einem ersten Material 13 auf, welche von der Innenwandung 15 der Lagerbuchse 11 radial nach innen abstehen. Nicht erkennbar ist auch in dieser Darstellung, dass die Lagerfortsätze 8 mit einem zweiten, weicheren Material 14 als das erste Material 13 hinterfüllt sind. Durch die drei elastisch nachgiebigen Lagerfortsätze 8 kann eine Dreipunktlagerung zur spielarmen oder spielfreien Lagerung eines Lagerzapfens 12 in der Lagerbuchse 11 ausgebildet werden, wodurch die Lagerung sehr exakt und spielfrei ausgebildet werden kann. Bevorzugt sind auch bei dieser Ausführung die Lagerfortsätze wie in Figur 4 gezeigt abgeschrägt oder abgerundet ausgebildet, sodass sich nur eine kreislinienförmige Berührung zwischen der Lagerbuchse 11 und dem Lagerzapfen 12 ergibt. Die in Figur 5 gezeigte Ausführung einer Lagerbuchse 11 könnte beispielsweise in einer Lagervorrichtung 9 wie sie in Figur 4 gezeigt ist zum Einsatz kommen.

Figur 6 zeigt eine andere Ausführung einer Lagervorrichtung 9 in einer schematischen, abgebrochenen und geschnittenen Seitenansicht. Die Wickelwelle 4 ist auch hier als Wickelrohr ausgebildet. Im Unterschied zur Figur 4 ist hier jedoch keine Lagerbuchse 11 eingesetzt, sondern vielmehr bildet das Ende 16 der Wickelwelle 4 selbst die Lagerbuchse 11 aus. Das Ende 16 der Wickelwelle 4 ist in diesem Fall direkt auf einem Lagerzapfen 12 drehbar gelagert. Der Lagerzapfen 12 ist hier durch einen zapfenartigen Vorsprung der Rollohalterung 18 gebildet. Im vorliegenden Fall ist der Lagerzapfen 12 einteilig mit der Rollohalterung 18 ausgebildet bzw. direkt an die Rollohalterung 18 angeformt. An der Außenwandung 22 des Lagerzapfens 12 sind radial nach außen hervorstehende Lagerfortsätze 8 aus einem ersten Material 13 angeordnet. Die Lagerfortsätze 8 des Lagerzapfens 12 sind auch hier mit einem zweiten Material 14 hinterfüllt, welches weicher ist als das erste Material 13 der Lagerfortsätze 8. Das zweite Material 14 ist vorliegend in Form eines Hohlzylinders auf der Innenseite des zapfenartigen Vorsprungs angeordnet. Der hier hohl ausgebildete, zapfenartige Vorsprung könnte jedoch auch vollständig mit dem zweiten Material 14 ausgefüllt sein oder das zweite Material 14 könnte auch auf der Außenseite des zapfenartigen Vorsprungs angebracht sein. Zudem könnte abweichend von der gezeigten Darstellung der Lagerzapfen 12 auch ein separates Bauteil sein, welches mit der Rollohalterung 18 verbunden ist. Vorzugsweise ist ein durch die Lagerfortsätze 8 gebildeter Außendurchmesser des Lagerzapfens 12 in unmontiertem Zustand größer als der Innendurchmesser der Lagerbuchse 11 bzw. des Endes 16 der Wickelwelle 4. Bei der Montage des Lagerzapfens 12 in die Lagerbuchse 11 können dann die Lagerfortsätze 8 aufgrund ihrer elastischen Nachgiebigkeit radial nach innen gedrückt werden, wodurch sich eine spielfreie Lagerung ergibt.

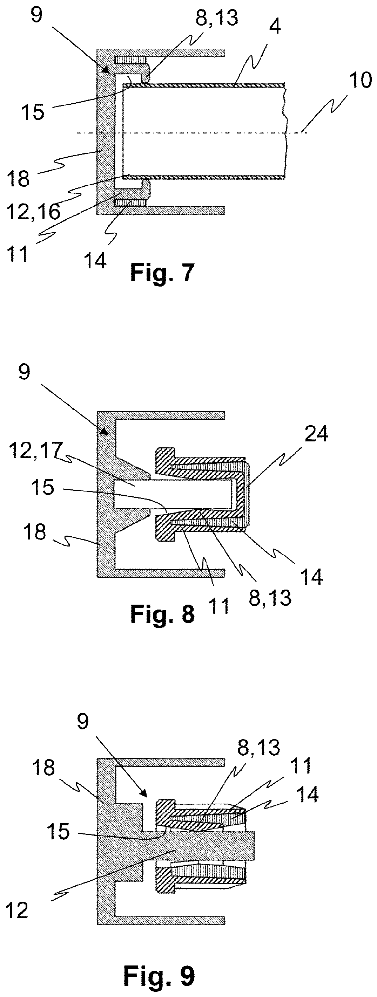

Figur 7 zeigt eine weitere Ausführung einer Lagervorrichtung 9. In diesem Fall bildet das Ende 16 der Wickelwelle 4 den Lagerzapfen 12 aus und ist direkt einer Lagerbuchse 11 der Rollohalterung 18 aufgenommen. Die Lagerbuchse 11 ist vorliegend wiederum einteilig an die Rollohalterung 18 eingeformt. Abweichend von der gezeigten Darstellung könnte jedoch die Lagerbuchse 11 auch ein separates Bauteil sein, welches mit der Rollohalterung 18 verbunden ist. An der Innenwandung 15 der Lagerbuchse 11 sind wiederum Lagerfortsätze 8 radial nach innen hervorstehend angeordnet. Die Lagerfortsätze 8 aus dem ersten Material 13 sind wiederum mit einem zweiten Material 14 hinterfüllt, welches weicher ist als das erste Material. Das zweite Material 14 ist hier an einer Außenseite der Lagerfortsätze 8 bzw. der Lagerbuchse 11 vorgesehen, könnte jedoch auch an einer Innenseite der Lagerfortsätze 8 bzw. der Lagerbuchse 11 angeordnet sein.

Figur 8 zeigt eine weitere Ausführung einer Lagervorrichtung 9, bei welcher ähnlich wie in der Figur 4 eine Lagerbuchse 11 in ein Ende 16 einer als Wickelrohr ausgebildeten und hier nicht dargestellten Wickelwelle 4 eingesteckt wird. Der Lagerzapfen 12 ist hier ebenfalls als Lagerstab 17, insbesondere als Metallstab, ausgebildet und mit der seitlichen Rollohalterung 18 verbunden. Die Lagerfortsätze 8 der Lagerbuchse 11 sind im analog zu denen der Figur 4 ausgebildet, sodass auf die dortigen Ausführungen verwiesen wird. Im Unterschied zur Ausführung der Figur 4 ist die Lagerbuchse 12 auf ihrer der Rollohalterung 8 abgewandten Rückseite 24 geschlossen, da der Lagerzapfen 12 in diesem Fall nicht zum Spannen der Spiralfeder 7 (siehe Figur 2) vorgesehen ist. Die Lagervorrichtung 9 ist hierdurch gut vor dem Eindringen von Staub geschützt. Das zweite Material 14 umgibt in diesem Fall auch die geschlossene Rückseite 24 der Lagerbuchse 12. Die Dämpfungswirkung des zweiten elastischen Materials kann hierdurch noch verbessert werden.

Figur 9 zeigt schließlich noch eine weitere Ausführung einer Lagervorrichtung 9, bei welcher der Lagerzapfen 12 ähnlich wie in Figur 6 an der Rollohalterung 18 angeordnet ist. Vorliegend ist der Lagerzapfen 12 einteilig mit der Rollohalterung 18 ausgebildet. Anders als in Figur 6 ist jedoch die Wickelwelle 4 nicht direkt auf dem Lagerzapfen 12 gelagert, sondern mittels einer in ein Ende 16 der hier nicht dargestellten Wickelwelle 4 eingesteckten Lagerbuchse 11. Die Lagerbuchse 11 weist wiederum mehrere, radial von der Innenwandung 15 hervorstehende Lagerfortsätze 8 auf. Die Lagerbuchse 11 entspricht im Wesentlichen der der Figur 6, sodass diesbezüglich auf die dortigen Ausführungen verwiesen wird.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Rollovorrichtung
- 2: Kraftfahrzeug
- 3: Laderaum
- 4: Wickelwelle
- 5: Rollobahn
- 6: Rolloträger
- 7: Spiralfeder
- 8: Lagerfortsatz
- 9: Lagervorrichtung
- 10: Längsachse
- 11: Lagerbuchse
- 12: Lagerzapfen
- 13: Erstes Material
- 14: Zweites Material
- 15: Innenwandung
- 16: Ende der Wickelwelle
- 17: Lagerstab
- 18: Rollohalterung
- 19: Betätigungsmittel
- 20: Antrieb
- 21: Auszugselement
- 22: Außenwandung
- 23: Stützzapfen
- 24: Rückseite

## Patentansprüche

1. Rollovorrichtung (1) für ein Kraftfahrzeug (2), insbesondere Rollovorrichtung (1) zum Abtrennen eines Laderaums (3) eines Kraftfahrzeugs (2),
mit einer Wickelwelle (4), auf welche eine Rollobahn (5) aufwickelbar ist,
mit wenigstens einer Lagervorrichtung (9), mittels welcher die Wickelwelle (4) um ihre Längsachse (10) drehbar gelagert ist,
wobei die Lagervorrichtung (9) eine Lagerbuchse (11) und einen Lagerzapfen (12) umfasst,
und wobei die Lagervorrichtung (9) mehrere, in Umfangsrichtung beabstandete, in Radialrichtung hervorstehende Lagerfortsätze (8) aus einem ersten Material (13) zur Lagerung des Lagerzapfens (12) in der Lagerbuchse (11) aufweist,
**dadurch gekennzeichnet,**
**dass** die Lagerfortsätze (8) elastisch nachgiebig an dem Lagerzapfen (12) oder an der Lagerbuchse (11) angeordnet sind und dass die Lagerfortsätze (8) mit einem zweiten, weicheren Material (14) hinterfüllt sind.

2. Rollovorrichtung (1) nach dem vorhergehenden Anspruch, **dadurch gekennzeichnet, dass** die Lagerfortsätze (8) derart abgeschrägt oder abgerundet sind, dass sie einen Winkelversatz zwischen dem Lagerzapfen (12) und der Lagerbuchse (11) ermöglichen und/oder dass die Lagerfortsätze (8) bezogen auf die Längsachse (10) der Wickelwelle (4) derart abgeschrägt oder abgerundet sind, dass sich eine linienförmige, vorzugsweise ringförmige, besonders bevorzugt kreislinienförmige, Berührung zwischen dem Lagerzapfen (12) und der Lagerbuchse (11) ergibt.

3. Rollovorrichtung (1) nach einem der vorhergehenden Ansprüche, **dadurch gekennzeichnet, dass** die Lagerfortsätze (8) radial nach innen hervorstehend an einer Innenwandung der Lagerbuchse (11) angeordnet sind.

4. Rollovorrichtung (1) nach einem der vorhergehenden Ansprüche, **dadurch gekennzeichnet, dass** ein durch die Lagerfortsätze (8) gebildeter Innendurchmesser der Lagerbuchse (11) im unmontierten Zustand kleiner ist als ein Außendurchmesser des Lagerzapfens (12).

5. Rollovorrichtung (1) nach einem der vorhergehenden Ansprüche, **dadurch gekennzeichnet, dass** die Lagerbuchse (11) durch ein Ende (16) einer als Wickelrohr ausgebildeten Wickelwelle (4) ausgebildet ist.

6. Rollovorrichtung (1) nach einem der vorhergehenden Ansprüche, **dadurch gekennzeichnet, dass** die Lagerbuchse (11) mit einem Ende (16) der Wickelwelle (4) verbunden ist, insbesondere in ein Ende (16) einer als Wickelrohr ausgebildeten Wickelwelle (4) eingesteckt ist.

7. Rollovorrichtung (1) nach einem der vorhergehenden Ansprüche, **dadurch gekennzeichnet, dass** der Lagerzapfen (12) durch einen Lagerstab (17), insbesondere einen Metallstab oder einen Kunststoffstab, ausgebildet ist, welcher mit einer Rollohalterung (18), insbesondere einem Endstück eines Rolloträgers (6), verbunden ist.

8. Rollovorrichtung (1) nach einem der vorhergehenden Ansprüche, **dadurch gekennzeichnet, dass** der Lagerzapfen (12) durch einen zapfenförmigen Vorsprung einer Rollohalterung (18), insbesondere eines Endstücks eines Rolloträgers (6), gebildet ist, wobei vorzugsweise der Vorsprung einstückig mit der Rollohalterung (18) ausgebildet ist.

9. Rollovorrichtung (1) nach einem der vorhergehenden Ansprüche, **dadurch gekennzeichnet, dass** ein durch die Lagerfortsätze (8) gebildeter Außendurchmesser des Lagerzapfens (12) im unmontierten Zustand größer ist als ein Innendurchmesser der Lagerbuchse (11).

10. Rollovorrichtung (1) nach einem der vorhergehenden Ansprüche, **dadurch gekennzeichnet, dass** das zweite Material (14) ein thermoplastisches Elastomer ist und/oder dass das erste Material (13) ein thermoplastischer Kunststoff ist.

11. Rollovorrichtung (1) nach einem der vorhergehenden Ansprüche, **dadurch gekennzeichnet, dass** die Lagerbuchse (11) oder der Lagerzapfen (12) ein Kunststoffspritzgussstück ist, vorzugsweise ein Zwei-Komponenten-Spritzgussstück ist, bei welchem das zweite Material (14) zum Hinterfüllen der Lagerfortsätze (8) direkt bei der Herstellung mit eingespritzt ist.

12. Lagerbuchse (11) für eine Rollovorrichtung (1) für ein Kraftfahrzeug (2), wobei die Rollovorrichtung (1) eine Lagervorrichtung (9) zur drehbaren Lagerung einer Wickelwelle (4) um ihre Längsachse (10) aufweist,
wobei die Lagerbuchse (11) mehrere, in Umfangsrichtung beabstandete, in Radialrichtung hervorstehende Lagerfortsätze (8) aus einem ersten Material (13) zur Lagerung eines Lagerzapfens (12) in der Lagerbuchse (11) aufweist, **dadurch gekennzeichnet,**
**dass** die Lagerfortsätze (8) elastisch nachgiebig an der Lagerbuchse (11) angeordnet sind
und **dass** die Lagerfortsätze (8) mit einem zweiten, weicheren Material (14) hinterfüllt sind.

13. Lagerbuchse (11) nach dem vorhergehenden Anspruch, **dadurch gekennzeichnet, dass** drei Lagerfortsätze (8) vorgesehen sind, wobei vorzugsweise die Lagerfortsätze (8) radial nach innen hervorstehend an einer Innenwandung (15) der Lagerbuchse (11) angeordnet sind.

14. Lagerbuchse (11) nach einem der beiden vorhergehenden Ansprüche, **dadurch gekennzeichnet, dass** die Lagerfortsätze (8) derart abgeschrägt oder abgerundet sind, dass sie einen Winkelversatz zwischen dem Lagerzapfen (12) und der Lagerbuchse (11) ermöglichen und/oder dass die Lagerfortsätze (8) derart abgeschrägt oder abgerundet sind, dass sie eine linienförmige, vorzugsweise ringförmige, besonders bevorzugt kreislinienförmige, Berührung zwischen dem Lagerzapfen (12) und der Lagerbuchse (11) ermöglichen.

15. Lagerbuchse (11) nach einem der Ansprüche 12 - 14, **dadurch gekennzeichnet, dass** die Lagerbuchse (11) ein Zwei-Komponenten-Spritzgussstück ist, bei welchem das zweite Material (14) zum Hinterfüllen der Lagerfortsätze (8) direkt bei der Herstellung mit eingespritzt ist.
